# EUROPÄISCHE PATENTSCHRIFT

(11) **EP 0 896 034 B1**
(45) Veröffentlichungstag und Bekanntmachung des Hinweises auf die Patenterteilung: **08.05.2002**
(21) Anmeldenummer: 98113971.0
(22) Anmeldetag: 25.07.1998
(51) Int. Cl.: C09B 67/22, C09B 48/00, C09B 67/10

(54) **Mischkristallpigmente der Chinacridonreihe**
Mixed crystals of pigments on the basis of quinacridones
Cristaux mixtes de pigments à base de quinacridones

(30) Priorität: 04.08.1997 DE 19733642
(43) Veröffentlichungstag der Anmeldung: 10.02.1999
(73) Patentinhaber: Clariant GmbH, 65929 Frankfurt am Main (DE)
(72) Erfinder: Urban, Manfred, 65205 Wiesbaden (DE); Böhmer, Martin, 61267 Neu-Anspach (DE); Schnaitmann, Dieter, Dr., 65817 Eppstein (DE)

(56) Entgegenhaltungen:
- EP-A- 0 348 347
- EP-A- 0 655 485
- EP-A- 0 799 862
- DE-A- 1 569 784
- DE-A- 1 569 787
- US-A- 4 099 980

## Beschreibung

Die vorliegende Erfindung betrifft neue Chinacridonmischkristallpigmente und ihre Verwendung als Farbmittel zum Färben von hochmolekularen organischen Materialien.

Chinacridone sind bekannte Verbindungen, die als Pigmente verwendet werden. In der Praxis werden hohe Anforderungen an ihre Echtheiten und coloristischen Eigenschaften gestellt. In technischem Maßstab erfolgt ihre Herstellung durch Oxidation von Dihydrochinacridonen in alkalischem Medium in Gegenwart von Lösemitteln und anschließender Trocken- oder Naßmahlung der erhaltenen grobkristallinen Rohpigmente oder durch Ringschluß von 2,5-Dianilinoterephthalsäure in Polyphosphorsäure oder Polyphosphorsäureester und anschließende Phasenumwandlung und Finish der erhaltenen feinteiligen Rohpigmente mit organischen Lösemitteln.

Die Herstellung von Chinacridonmischkristallpigmenten wird in den nachfolgenden Patentschriften beschrieben.
Die US-PS 4 099 980 beschreibt die Herstellung von Chinacridonmischkristallpigmenten, bestehend aus unsubstituiertem Chinacridon und 4,11-Dichlorchinacridon, die jedoch in der γ-Phase des unsubstituierten Chinacridons vorliegen.
Die US-PS 3 160 510 beschreibt die Herstellung von Chinacridonmischkristallpigmenten durch Trockenmahlung der Rohpigmentmischungen mit Salz und anschließende Lösemittelbehandlung der abgetrennten Mahlgüter oder durch Schwefelsäureumfällung der Pigmentmischungen und anschließende Lösemittelbehandlung der getrockneten feinteiligen Rohpigmente.

Der vorliegenden Erfindung lag die Aufgabe zugrunde, den Anwendungsbereich von Chinacridonpigmenten coloristisch zu erweitern, insbesondere im Hinblick auf den rotvioletten Bereich.

Es wurde gefunden, daß Mischungen aus 85 - 99 % unsubstituiertem Chinacridon der β-Phase und 1 - 15 % von ein oder mehreren, insbesondere 1 oder 2, verschieden substituierten Chinacridonen unter bestimmten, erfindungsgemäßen Bedingungen Mischkristalle, auch feste Lösungen genannt, bilden. Unter Mischkristallen versteht man, daß eine oder mehrere, meist in einem nicht stöchiometrischen Verhältnis zu einer Kristallphase zugesetzte Komponente(n) und die Wirtsverbindung in einem gemeinsamen Gitter kristallisieren. Das Röntgenbeugungsdiagramm eines Mischkristalls zeigt z. B. nur die Reflexe des (in vielen Fällen aufgeweiteten) Kristallgitters der Wirtsverbindung oder auch eines ähnlichen oder auch eines deutlich anderen Kristallgitters, während im Röntgenbeugungsdiagramm der entsprechenden mechanischen Mischung die Reflexe aller Komponenten nachweisbar sind.

Gegenstand der Erfindung sind Mischkristallpigmente der β-Phase bestehend aus
a) 85 bis 99 Gew.-%, insbesondere 87 bis 95 Gew.-%, unsubstituiertem Chinacridon der β-Phase der allgemeinen Formel (I), 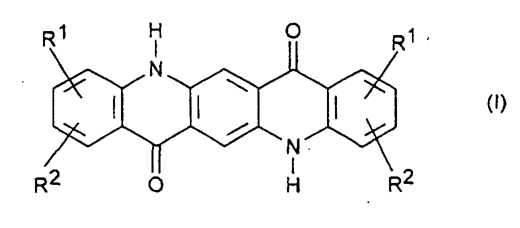 in welcher R¹ und R² Wasserstoffatome bedeuten und
b) 1 bis 15 Gew.-%, insbesondere 5 bis 13 Gew.-%, eines oder mehrerer substituierter Chinacridone der allgemeinen Formel (I), worin die Substituenten R¹ und R² gleich oder verschieden sind und Chlor-, Brom- oder Fluoratome oder C₁-C₄-Alkyl-, C₁-C₄-Alkoxy- oder Carbonamidgruppen, die durch C₁-C₆-Alkylgruppen substituiert sein können, und R¹ zusätzlich Wasserstoff sein kann, bedeuten.

Bevorzugte Mischkristallpigmente sind solche, die ein oder zwei Verbindungen (b) der allgemeinen Formel I enthalten, worin R¹ Wasserstoff, Chloratome, Methyl- oder Carbonamidgruppen, und R² Chlor, Methyl oder Carbonamid bedeuten.

Die coloristischen Eigenschaften der erfindungsgemäßen Mischkristallpigmente unterscheiden sich erheblich von denen der entsprechenden mechanischen Mischungen der Einzelkomponenten. Sie besitzen insbesondere reinere Farbtöne und weisen höhere Farbstärken auf. Es werden Farbtöne erhalten, die mit den Einzelkomponenten oder den im Stand der Technik bekannten Mischkristallen nicht eingestellt werden können, insbesondere im Rotviolettbereich. Die Echtheiten sind ausgezeichnet.

Gegenstand der vorliegenden Erfindung ist auch ein Verfahren zur Herstellung der vorstehend beschriebenen Mischkristallpigmente, dadurch gekennzeichnet, daß man die der Verbindung a) zugrundeliegende 2,5-Dianilino-terephthalsäure und die der Verbindung (b) zugrundeliegende(n) substituierte(n) Terephthalsäure(n) im Verhältnis 85: 15 bis 99 : 1, insbesondere 87 : 13 bis 95 : 5, in Gegenwart von Polyphosphorsäure und/oder Polyphosphorsäureestern cyclisiert, das nach der Cyclisierung vorliegende Ringschlußgemisch bei einer Temperatur von mindestens 110 °C, bevorzugt 110 bis 180 °C, besonders bevorzugt 135 bis 165 °C, mit Wasser oder verdünnter Phosphorsäure unter Druck hydrolysiert und anschließend das Mischkristallpigment, gegebenenfalls nach einem Feinverteilungsschritt und/oder nach einer Finishbehandlung, isoliert.

Als Ringschlußmittel wird im allgemeinen die 3- bis 10fache Menge, vorzugsweise die 3- bis 5fache Menge, Polyphosphorsäure oder -methylester, bezogen auf die Dianilinoterephthalsäure, eingesetzt. Der P₂O₅-Gehalt der Polyphosphorsäure oder des -esters liegt zwischen 80 und 85 Gew.-%, vorzugsweise zwischen 83 und 85 Gew.-%, entsprechend einem Phosphorsäureäquivalent von 110 bis 120 %. Größere Mengen an Ringschlußmittel können verwendet werden, dies ist aber im allgemeinen nicht erforderlich. Die Ringschlußtemperatur beträgt im allgemeinen 80 bis 150 °C, vorzugsweise 120 bis 140 °C. Bei der Ringschlußreaktion können auch inerte Lösungsmittel, wie z. B. aromatische Kohlenwasserstoffe, zugegen sein.

Die Zeit bis zur vollständigen Cyclisierung beträgt im allgemeinen 0,5 bis 24 Stunden, meist jedoch nur 1 bis 2 Stunden.

Die nach der Cyclisierung vorliegenden Ringschlußgemische werden bei einer Temperatur von mindestens 110 °C mit Wasser oder verdünnter Phosphorsäure, gegebenenfalls in Gegenwart eines unter den Reaktionsbedingungen inerten organischen Lösemittels, z. B. aromatische Kohlenwasserstoffe, unter Druck hydrolysiert. Für die Hydrolyse wird Wasser oder verdünnte Phosphorsäure verwendet. Dabei wird das Ringschlußgemisch unter Druck in das Wasser oder die verdünnte Phosphorsäure eindosiert. Es kann aber auch umgekehrt verfahren werden. Die erfindungsgemäße Hochtemperaturhydrolyse kann kontinuierlich oder diskontinuierlich durchgeführt werden. Vorteilhafterweise wird sie kontinuierlich in einem statischen Mischer durchgeführt. Im allgemeinen wird, bezogen auf die Polyphosphorsäure, die 2- bis 10fache Menge Wasser oder verdünnte Phosphorsäure eingesetzt. Die Dauer der Hydrolyse ist abhängig von der Dosiergeschwindigkeit der Ringschlußschmelze, beispielsweise 0,5 bis 24 Stunden, vorzugsweise 0,5 bis 5 Stunden.

Durch die erfindungsgemäße Wahl der Dianilinoterephthalsäuren, der Ringschlußund der Hochtemperaturhydrolysebedingungen werden gebrauchsfähige Mischkristallpigmente bereits unmittelbar nach der Hochtemperaturhydrolyse erhalten, die nach üblichen Methoden isoliert werden können. Für bestimmte Anwendungszwecke kann es vorteilhaft sein, die so erhaltenen feinteiligen Mischkristalle (im vorliegenden Sprachgebrauch dann "Präpigmente") einer Finishbehandlung bei erhöhten Temperaturen zu unterwerfen, oder es entstehen zunächst grobkristalline Mischkristallrohpigmente, die für bestimmte Anwendungen vorteilhaft einer mechanischen Feinverteilung unterworfen werden, und direkt oder nach einer Finishbehandlung in eine gebrauchsfähige Pigmentform überführt werden.

Die Mischkristallpräpigmente werden, gegebenenfalls nach einer Zwischenisolierung, einer Nachbehandlung mit oder ohne Zusatz von Lösemitteln bei einer Temperatur von 50 bis 200 °C unterworfen und nach der Abtrennung des flüssigen Mediums isoliert. Das flüssige Medium kann vorzugsweise einen alkalischen pH-Wert, z. B. pH 7,5 bis 13, haben. Die grobkristallinen Mischkristallrohpigmente werden einer mechanischen Feinverteilung unterworfen und anschließend die dabei erhaltenen Mischkristallpigmente in üblicher Weise isoliert oder die dabei erhaltenen Mischkristallpräpigmente werden, gegebenenfalls nach einer Zwischenisolierung, einer Finishbehandlung, wie vorstehend beschrieben, unterworfen und nach der Abtrennung des flüssigen Mediums isoliert. Die Feinverteilung kann durch Trocken- oder durch Naßmahlung erfolgen. Bevorzugt wird eine Naßmahlung mit hohem Energieeintrag durchgeführt, weil hierzu das Mischkristallrohpigment nicht getrocknet werden muß.

Für die Trockenmahlung eignen sich alle diskontinuierlichen und kontinuierlichen Schwing- oder Rollmühlen und für die Naßmahlung alle diskontinuierlichen und kontinuierlichen Rührwerkskugel-, Roll- und Schwingmühlen sowie Kneter.
Zur Naßmahlung werden die Mischkristallrohpigmentsuspensionen direkt, oder, nach Zwischenisolierung, die feuchten Preßkuchen oder die getrockneten grobkristallinen Mischkristallrohpigmente mit Wasser, verdünnter Natronlauge und/oder einem vorzugsweise mit Wasser mischbaren Lösemittel bis zu einer mahlfähigen Konsistenz verdünnt. Als Mahlkörper dienen Kugeln aus Zirkonoxid, Zirkonmischoxid, Aluminiumoxid, Stahl oder Quarz vom Durchmesser 0,2 bis 20 mm. Die Dauer der Mahlung beträgt zweckmäßigerweise zwischen 5 und 60 Minuten, bevorzugt zwischen 7,5 und 30 Minuten.

Die nach der Hochtemperaturhydrolyse oder nach der Feinverteilung vorliegenden Mischkristallpräpigmente können in wäßriger Suspension, gegebenenfalls nach Zugabe von Lösemitteln, oder in organischem Medium einer Finishbehandlung unterzogen werden. Die für die Durchführung der Finishbehandlung einzuhaltenden Bedingungen sind in hohem Maße von den angestrebten Eigenschaften der Mischkristallpigmente abhängig und werden jeweils daraufhin ausgerichtet. Normalerweise wird die Suspension der Mischkristallpräpigmente in dem betreffenden Milieu bei einer Temperatur im Bereich zwischen 50 und 200 °C, gegebenenfalls unter erhöhtem Druck, 1 bis 24 Stunden lang behandelt, vorzugsweise 1 bis 6 Stunden bei 50 bis 150 °C. Im allgemeinen wird dafür die nach der Naßmahlung erhaltene Suspension ohne Zwischenisolierung des Mahlguts eingesetzt. Die zugefügte Lösemittelmenge kann hierbei innerhalb weiter Grenzen schwanken. Bevorzugt verwendet man die gleiche bis zur 5fachen Gewichtsmenge an Lösemittel, bezogen auf das Gewicht der Mischkristallpräpigmente. Nach beendetem Finish können die dafür gebrauchten Lösemittel wieder destillativ zurückgewonnen und erneut eingesetzt werden. Unter Ausnutzung der auf diese Weise zur Verfügung stehenden Variationsmöglichkeiten lassen sich je nach Verwendungszweck die nach dem erfindungsgemäßen Verfahren anfallenden Mischkristallpräpigmente in eine deckendere oder transparentere Form überführen, was über das Lösevermögen des in Betracht gezogenen Lösemittels, dessen Konzentration, die Auswahl der Temperatur und die Dauer der Finishbehandlung gesteuert werden kann.

Zur Verbesserung der coloristischen Eigenschaften und zur Erzielung bestimmter coloristischer Effekte können an einer beliebigen Stelle des Verfahrens Lösemittel, Pigmentdispergatoren, oberflächenaktive Mittel, Entschäumer, Extender oder andere Zuschlagstoffe zugesetzt werden. Es können auch Mischungen dieser Zusatzstoffe verwendet werden. Die Zugabe der Zusatzstoffe kann auf einmal oder in mehreren Portionen erfolgen. Die Zugabe kann vor, während oder nach dem Ringschluß, bei der Hochtemperaturhydrolyse, der Mahlung oder der Finishbehandlung oder während oder nach der Isolierung vorgenommen werden.

Der am besten geeignete Zeitpunkt muß zuvor durch orientierende Versuche ermittelt werden.

Oberflächenaktive Mittel, die bei dem Verfahren zur Anwendung kommen, sind beispielsweise kationische, anionische oder nichtionische Tenside, vorzugsweise Fettsäuretauride, Fettsäuresarkoside, Fettalkoholpolyglykolether, Fettalkoholpolyglykolester, Alkylpolyglykolethersulfate, Alkylphenolpolyglykolether, Alkansulfonsäuren sowie ihre Salze, Alkylphenylsulfonsäuren sowie ihre Salze und Alkylphenolpolyglykolethersulfate.

Als Pigmentdispergatoren die bei dem Verfahren zur Anwendung kommen, werden die aus EP-A-0 666 288 und EP-A-0 655 485 bekannten Verbindungen mit der allgemeinen Formel (II)

P ― Xm (II)

eingesetzt, in der
P für einen m-wertigen Rest eines linearen Chinacridons der allgemeinen Formel (I) steht, in dem R¹ und R² gleich sind und Wasserstoffatome oder Methylgruppen darstellen,
X eine Gruppe der Formel (III)

-COOM (III)

oder eine Gruppe der Formel (IV)

SO₃M (IV)

darstellt, worin
M das Wasserstoffion H⁺ oder das Äquivalent M^{r+}/r eines r-wertigen Metallkations bezeichnet, wobei r für den betreffenden Fall dann übereinstimmend eine der Zahlen 1, 2 oder 3 ist, wie z.B. Li¹⁺, Na¹⁺, K¹⁺, Mg²⁺, Ca²⁺+, Sr²⁺, Ba²⁺, Mn²⁺, Cu²⁺, Ni²⁺, Cd²⁺, Co²⁺, Zn²⁺, Fe²⁺, Al³⁺, Cr³⁺ oder Fe³⁺; oder ein Ammoniumion mit der Struktur N⁺R³R⁴R⁵R⁶ definiert, wobei die Substituenten R³, R⁴, R⁵ und R⁶ am quartären N-Atom einzeln für sich genommen sowie unabhängig voneinander jeweils Wasserstoffatome oder C₁-C₃₀-Alkyl-, C₂-C₃₀-Alkenyl- oder C₅-C₃₀-Cycloalkylgruppen, die durch Hydroxy-, Di-(C₁-C₄-alkyl)amino-, Carboxy- oder Carboxamidgruppen substituiert sein können und m eine Zahl zwischen 1 und 4 ist, oder
X eine Gruppe der Formel (V) 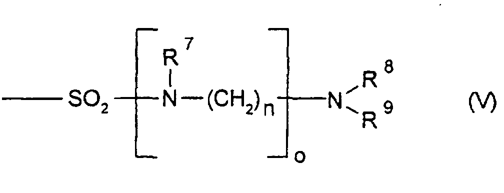 darstellt, worin R⁸ und R⁹ unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R⁸ und R⁹ gemeinsam mit dem angrenzenden Stickstoffatom ein aliphatisches oder aromatisches, fünf- oder sechsgliedriges heterocyclisches Ringsystem bilden, mit jeweils 1 bis 3 ringangehörigen, gleichen oder unterschiedlichen Heteroatomen aus der Reihe Stickstoff, Sauerstoff oder Schwefel, R⁷ ein Wasserstoffatom oder eine C₁-C₄-Alkylgruppe ist, n eine Zahl von 1 bis 6, o die Zahl 0 oder 1, und m eine Zahl von 1 bis 4 ist, oder
X eine Gruppe der Formel (VI) 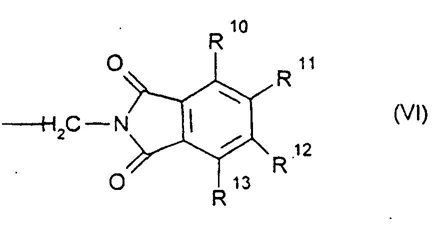 darstellt, wobei R¹⁰, R¹² und R¹³ ein Wasserstoff-, Fluor-, Chlor- oder Bromatom ist, und R¹¹ ein Wasserstoff-, Fluor, Chlor- oder Bromatom ist oder eine Nitro-, C₁-C₅-Alkyl-, C₁-C₆-Alkoxy- oder Benzoylaminogruppe bedeutet und m eine Zahl von 1 bis 4 ist.

Bevorzugt sind Pigmentdispergatoren mit der allgemeinen Formel (II), worin P den Rest des unsubstituierten linearen Chinacridons und X die Phthalimidomethylengruppe oder die Sulfonamidgruppe bedeutet. Pro Gewichtseinheit Mischkristall-Rohpigment, -Präpigment oder -Pigment können zweckmäßigerweise insgesamt zwischen 0,1 und 20 Gew.-%, vorzugsweise 3 bis 10 Gew.-%, oberflächenaktive Mittel und/oder Pigmentdispergatoren zugesetzt werden.

Organische Lösemittel, die in einem oder mehreren Schritten des erfindungsgemäßen Verfahrens zum Einsatz kommen können, sind beispielsweise: Alicyclische Kohlenwasserstoffe wie z. B. Cyclohexan; C₁-C₈-Alkanole und alicyclische Alkohole wie z. B. Methanol, Ethanol, n- oder Isopropanol, n- oder Isobutanol, tert. Butanol, Pentanole, Hexanole, Cyclohexanol; C₁-C₅-Dialkyl- oder cyclische Ketone wie z. B. Aceton, Diethylketon, Methylisobutylketon, Methylethylketon oder Cyclohexanon; Ether und Glykolether wie z. B. der Monomethyl- oder Monoethylether des Ethylen- und Propylenglykols, Butylglykol, Ethyldiglykol oder Methoxybutanol; aromatische Kohlenwasserstoffe wie z. B. Toluol, Xylole oder Ethylbenzol, cyclische Ether wie z. B. Tetrahydrofuran, aromatische Chlorkohlenwasserstoffe wie z. B. Chlorbenzol, o-Dichlorbenzol, 1,2,4-Trichlorbenzol oder Brombenzol; substituierte Aromaten wie z. B. Benzoesäure, Nitrobenzol oder Phenol; aliphatische Carbonsäureamide wie z. B. Formamid oder Dimethylformamid; cyclische Carbonsäureamide, wie z. B. N-Methylpyrrolidon; Carbonsäure-C₁-C₄- alkylester, wie z. B. Ameisensäurebutylester, Essigsäureethylester oder Propionsäurepropylester; Carbonsäure-C₁-C₄-glykolester, Phthalsäure- und Benzoesäure-C₁-C₄-alkylester wie z. B. Benzoesäureethylester; heterocyclische Basen wie z. B. Pyridin, Chinolin, Morpholin oder Picolin; sowie Dimethylsulfoxid und Sulfolan. Bevorzugte organische Lösemittel sind Alkanole, insbesondere Ethanol, Propanole, Butanole und Pentanole; aliphatische Carbonsäureamide, insbesondere Formamid oder Dimethylformamid; cyclische Carbonsäureamide, insbesondere N-Methylpyrrolidon; aromatische Kohlenwasserstoffe wie z. B. Toluol, Xylole oder Ethylbenzol; aromatische Chlorkohlenwasserstoffe wie z. B. Chlorbenzol oder o-Dichlorbenzol.

Es war überraschend und nicht vorhersehbar, daß durch die Hochtemperaturhydrolyse reine Mischkristallpigmente erhalten werden, während nach den Angaben der US-PS 3 160 510 nur dann Chinacridonmischkristallpigmente (und keine Mischungen) entstehen, wenn das unsubstituierte Chinacridon in deutlich geringerem Anteil als bei der vorliegenden Erfindung enthalten ist. Außerdem entstehen nach den Angaben der US-PS 4 099 980 bei der Solvolyse von Ringschlußgemischen mit der obigen Zusammensetzung Mischkristallpigmente in der y-Phase des unsubstituierten Chinacridons, während nach dem erfindungsgemäßen Verfahren Mischkristallpigmente entstehen, die in der ß-Phase vorliegen.

Die Herstellung von Mischkristallpigmenten nach dem erfindungsgemäßen Verfahren hat sich als besonders wirtschaftlich sowie umweltfreundlich erwiesen, weil bei der Hochtemperaturhydrolyse die Hydrolyseprodukte direkt als Mischkristallpigmente erhalten werden können. Diese besitzen coloristische Eigenschaften, die mit den bei niedriger Hydrolysetemperatur hergestellten Pigmenten nicht erreicht werden können, z. B. ein blaustichiges Rot.

Bei dem erfindungsgemäßen Verfahren ist es möglich, mit geringen Mengen an Chemikalien und Lösemitteln auszukommen, welche anschließend weiterverarbeitet oder wieder vollständig regeneriert werden können. Somit treten keine Entsorgungsprobleme auf.

Die nach der vorliegenden Erfindung erhältlichen Mischkristallpigmente zeichnen sich durch ihre hervorragenden coloristischen und rheologischen Eigenschaften aus, insbesondere durch eine hohe Flockungsstabilität, eine leichte Dispergierbarkeit, ein gutes Glanzverhalten und eine hohe Farbstärke.

Die erfindungsgemäßen Mischkristallpigmente lassen sich zum Pigmentieren von hochmolekularen organischen Materialien natürlicher oder synthetischer Herkunft einsetzen. Hochmolekulare organische Materialien sind beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, z. B. Aminoplaste, insbesondere Harnstoff- und Melaminformaldehydharze, Alkydharze, Acrylharze, Phenoplaste, Polycarbonate, Polyolefine, wie Polyethylen oder Polypropylen, Polystyrol, Polyvinylchlorid, Polyacrylnitril, Polyacrylsäureester, Polyamide, Polyurethane oder Polyester, Gummi, Casein, Silikon und Silikonharze, einzeln oder in Mischungen.

Dabei spielt es keine Rolle, ob die erwähnten hochmolekularen organischen Verbindungen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemäßen Mischkristallpigmente als Blends oder in Form von Präparationen oder Dispersionen zu benutzen. Bezogen auf das zu pigmentierende, hochmolekulare organische Material, setzt man die erfindungsgemäßen Mischkristallpigmente in einer Menge von vorzugsweise 0,1 bis 10 % ein.

Zur Beurteilung der Eigenschaften der nach der Erfindung hergestellten Mischkristallpigmente auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein Polyesterlack (PE) auf Basis von Celluloseacetobutyrat und eines Melaminharzes sowie ein wäßriger Lack auf Polyurethanbasis (PUR) ausgewählt.

Zur Beurteilung der Eigenschaften der nach der Erfindung erzeugten Mischkristallpigmente auf dem Kunststoffsektor wurde aus der Vielzahl der bekannten Kunststoffe Weichpolyvinylchlorid (PVC) und Polyolefin (PO) ausgewählt.

Zur Beurteilung der Eigenschaften der nach der Erfindung erzeugten Mischkristallpigmente auf dem Drucksektor wurden aus der Vielzahl der bekannten Drucksysteme ein Tiefdrucksystem auf Nitrocellulosebasis (NC-Druck) ausgewählt.

Die Bestimmung der Farbstärke und des Farbtons erfolgte nach DIN 55986. Die Rheologie des Mahlguts nach der Dispergierung (Millbase-Rheologie) wurde anhand der folgenden fünfstufigen Skala bewertet:
- 5: dünnflüssig
- 4: flüssig
- 3: dickflüssig
- 2: leicht gestockt
- 1: gestockt

Nach dem Verdünnen des Mahlguts auf die Pigmentendkonzentration wurde die Viskosität mit dem Viskospatel nach Rossmann, Typ 301 der Firma Erichsen beurteilt.

Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.

Die Bestimmung der Kristallphase der Mischkristallrohpigmente, Mischkristallpräpigmente, Mischkristallpigmente und Pigmentzubereitungen erfolgte durch Röntgenspektroskopie.

Im vorangehenden Text und in den nachfolgenden Beispielen beziehen sich Teile jeweils auf Gewichtsteile und Prozente jeweils auf Gewichtsprozente der so beschriebenen Substanzen.

### Beispiel 1

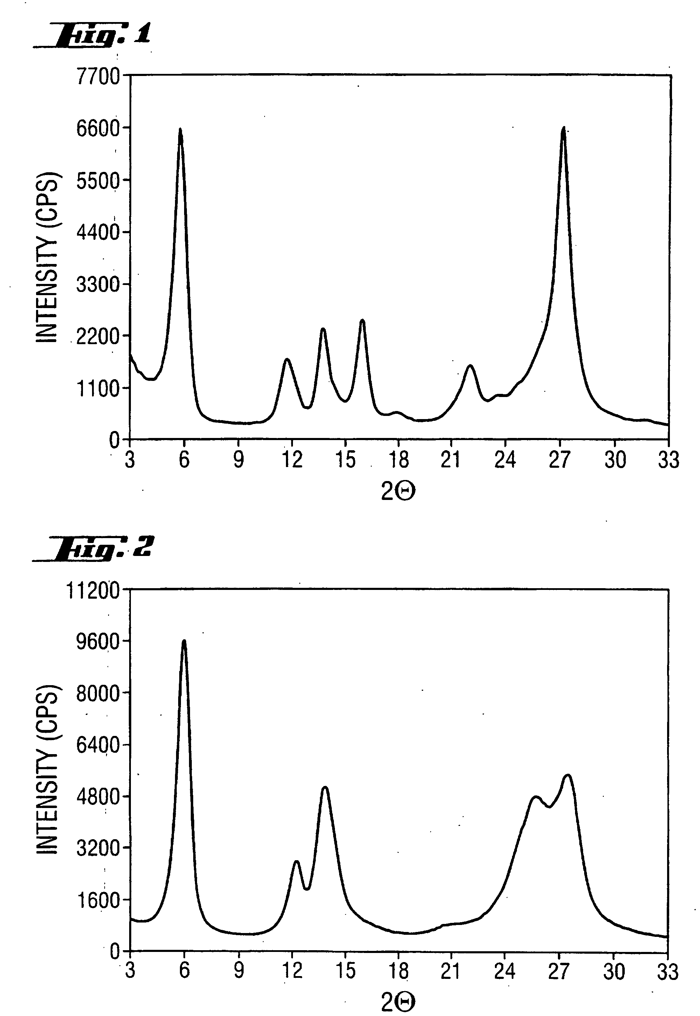

In ein Druckgefäß werden 392 Teile Polyphosphorsäure, die 85,0 % P₂O₅ enthält, eindosiert. Danach werden 70,5 Teile 2,5-Dianilinoterephthalsäure und 7,8 Teile 2,5-Di-(4-toluidino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1762 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallpigment abgesaugt, mit Wasser neutral gewaschen und bei 80 °C getrocknet.
Man erhält 70,2 Teile Mischkristallpigment. Es liegt das Spektrum des Mischkristallpigments vor (Figur 1). Dieses Spektrum unterscheidet sich vom Spektrum des unsubstituierten Chinacridons der ß-Phase durch einen zusätzlichen Reflex bei 13,73 ° (2θ). Die typischen Reflexe des 2,9-Dimethylchinacridons bei 11,05 und 25,31 ° (2θ) (Figur 6) sind nicht nachweisbar. In Tabelle 1 sind die Röntgenbeugungsspektren der Figuren 1 und 6 in digitaler Form wiedergegeben.

Im AM-Lack werden transparente und farbstarke Lackierungen mit sehr reinem Farbton erhalten. Die Rheologie wird mit 5 bewertet und die Viskosität beträgt 3,9 s. Im PUR-Lack werden transparente und farbstarke Lackierungen mit reinem Farbton und rotstichiger Nuance erhalten.

### Beispiel 2 (Vergleichsbeispiel)

In ein Rührgefäß werden 383 Teile Polyphosphorsäure, die 85,0 % P₂O₅ enthält, eindosiert. Danach werden 69,0 Teile 2,5-Dianilinoterephthalsäure und 7,66 Teile 2,5-Di-(4-toluidino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Rührgefäß eindosiert und unter Rühren mit einer Mischung aus 1725 Teilen Phosphorsäure 30 %ig von 55 °C hydrolysiert. Dabei steigt die Temperatur auf 67 °C an. Es wird 0,5 Stunden bei 67 °C gerührt. Danach wird auf 60 °C abgekühlt, das Pigment abgesaugt, mit Wasser neutral gewaschen und bei 80 °C getrocknet.

Man erhält 68,7 Teile Pigment, das in der α-Phase des unsubstituierten Chinacridons vorliegt (Figur 2). In Tabelle 1 ist das Röntgenbeugungsspektrum der Figur 2 in digitaler Form wiedergegeben.

### Beispiel 3 (Vergleichsbeispiel)

In ein Rührgefäß werden 383 Teile Polyphosphorsäure, die 85,0 % P₂O₅ enthält, eindosiert. Danach werden 69,0 Teile 2,5-Dianilinoterephthalsäure und 7,66 Teile 2,5-Di-(4-toluldino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Rührgefäß eindosiert und unter Rühren mit einer Mischung aus 1725 Teilen Phosphorsäure 30 %ig von 55 °C hydrolysiert. Dabei steigt die Temperatur auf 67 °C an. Es wird 0,5 Stunden bei 67 °C gerührt. Danach wird auf 60 °C abgekühlt, das Pigment abgesaugt, mit Wasser neutral gewaschen.

Man erhält 452 Teile Präpigment-Preßkuchen 15,2 %ig.
Zur Finishoperation werden 384,2 Teile dieses Präpigment-Preßkuchens in ein Rührgefäß eingefüllt. Danach werden 540,2 Teile Wasser, 6,0 Teile Natriumhydroxid 98 %ig und 175 Teile Isobutanol zugegeben. Es wird auf 150 °C unter Druck erhitzt und 5 Stunden bei dieser Temperatur gerührt. Danach wird auf 90 °C abgekühlt und das Isobutanol bis 100 °C am Übergang abdestilliert. Anschließend wird die Suspension auf 60 °C abgekühlt, das Pigment abgesaugt, mit Wasser neutral gewaschen und bei 80 °C getrocknet.

Man erhält 56,9 Teile Pigment. Es liegt das Spektrum der α-Phase des unsubstituierten Chinacridons, mit einigen Fremdreflexen, vor (Figur 2).

### Beispiel 4 (Vergleichsbeispiel)

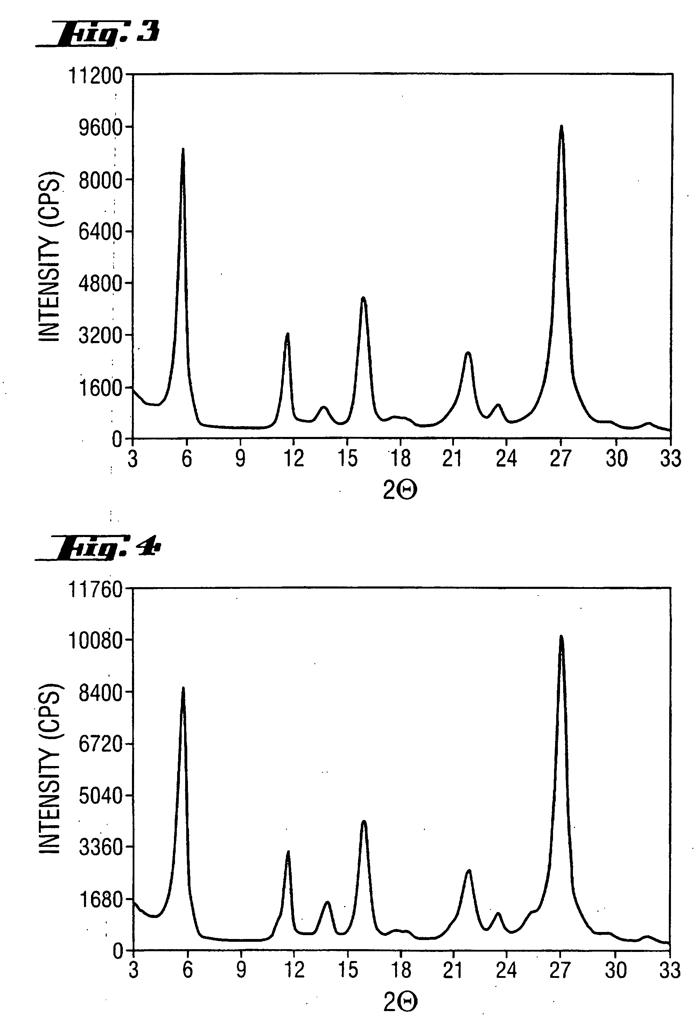

In ein Druckgefäß werden 424 Teile Polyphosphorsäure, die 85,0 % P₂O₅ enthält, eindosiert. Danach werden 84,7 Teile 2,5-Dianilinoterephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 1906 Teilen Phosphorsäure 30,9 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Pigment abgesaugt, mit Wasser neutral gewaschen und bei 80 °C getrocknet.
Man erhält 76,0 Teile Pigment (C. I. Pigment Violet 19). Es liegt das Spektrum der β-Phase des unsubstituierten Chinacridons vor (Figur 3). In Tabelle 1 ist das Röntgenbeugungsspektrum der Figur 3 in digitaler Form wiedergegeben. Im AM-Lack werden deckende Lackierungen erhalten, die deutlich blaustichiger und trüber sind als die mit dem gemäß Beispiel 1 hergestellten Mischkristallpigment.

### Beispiel 5 (Vergleichsbeispiel)

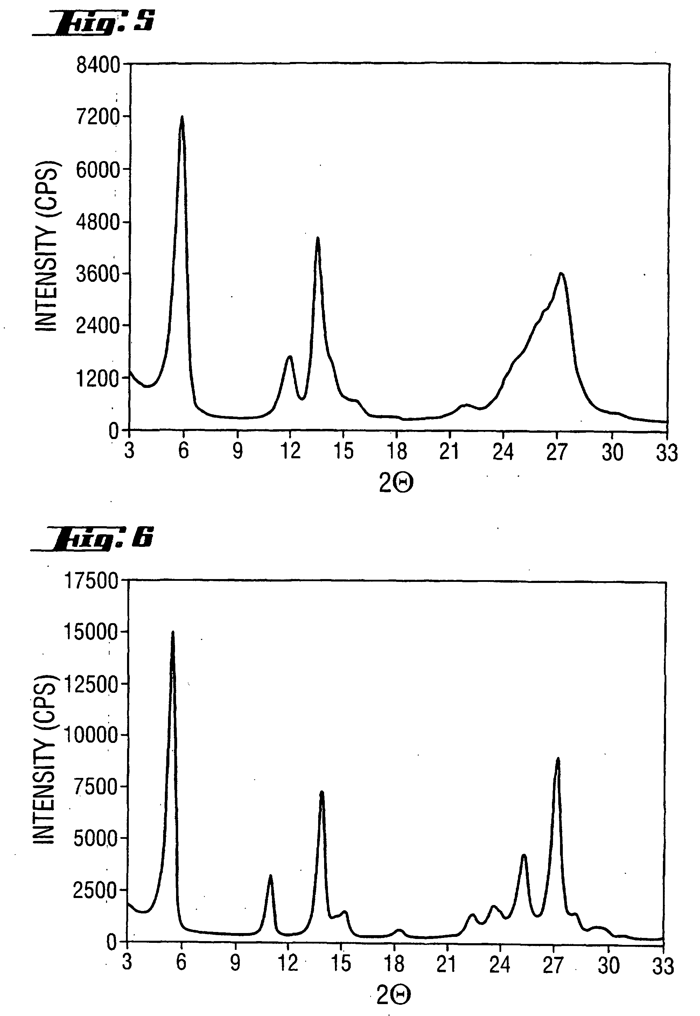

9 Teile Pigment, hergestellt gemäß Beispiel 4, und 1 Teil 2,9-Dimethylchinacridonpigment, hergestellt durch Ringschluß von 2,5-Di-(4-toluidino)-terephthalsäure und anschließende Heißhydrolyse gemäß Beispiel 4, werden mechanisch gemischt. Im Röntgenspektrum sind alle charakteristischen Peaks der beiden Komponenten sichtbar (Figur 4). In Tabelle 1 ist das Röntgenbeugungsspektrum der Figur 4 in digitaler Form wiedergegeben.

Im AM-Lack werden deckende Lackierungen erhalten, die deutlich blaustichiger und trüber sind als die mit dem gemäß Beispiel 1 hergestellten Mischkristallpigment.

### Beispiel 6

In ein Druckgefäß werden 387 Teile Polyphosphorsäure, die 85,0 % P₂O₅ enthält, eindosiert. Danach werden 73,5 Teile 2,5-Dianilinoterephthalsäure und 3,9 Teile 2,5-Di-(4-toluidino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1741 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallpigment abgesaugt, mit Wasser neutral gewaschen und bei 80 °C getrocknet.
Man erhält 69,4 Teile Mischkristallpigment. Es liegt das Spektrum des Mischkristallpigments vor (Figur 1). Im AM-Lack werden transparente und farbstarke Lackierungen mit sehr reinem Farbton erhalten. Die Rheologie wird mit 5 bewertet und die Viskosität beträgt 3,9 s.

### Beispiel 7

In ein Druckgefäß werden 382 Teile Polyphosphorsäure, die 85,0 % P₂O₅ enthält, eindosiert. Danach werden 64,9 Teile 2,5-Dianilinoterephthalsäure und 11,5 Teile 2,5-Di-(4-toluidino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1721 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallpigment abgesaugt, mit Wasser neutral gewaschen und bei 80 °C getrocknet.
Man erhält 68,6 Teile Mischkristallpigment. Es liegt das Spektrum des Mischkristallpigments vor (Figur 1). Die typischen Reflexe des 2,9-Dimethylchinacridons sind nicht nachweisbar. In der entsprechenden mechanischen Mischung sind die charakteristischen Peaks des 2,9-Dimethylchinacridons sichtbar. Im AM-Lack werden transparente und farbstarke Lackierungen mit sehr reinem und sehr rotstichigem Farbton erhalten. Die Rheologie wird mit 5 bewertet und die Viskosität beträgt 3,9 s. Im NC-Druck werden farbstarke Drucke erhalten.

### Beispiel 8

In ein Druckgefäß werden 380 Teile Polyphosphorsäure, die 85,0 % P₂O₅ enthält, eindosiert. Danach werden 66,5 Teile 2,5-Dianilinoterephthalsäure und 9,5 Teile 2,5-Di-(4-toluidino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1711 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallpigment abgesaugt, mit Wasser neutral gewaschen und bei 80 °C getrocknet.
Man erhält 68,2 Teile Mischkristallpigment. Es liegt das Spektrum des Mischkristallpigments vor (Figur 1). In der entsprechenden mechanischen Mischung sind die charakteristischen Peaks des 2,9-Dimethylchinacridons sichtbar. Im AM-Lack werden transparente und farbstarke Lackierungen mit sehr reinem und sehr rotstichigem Farbton erhalten. Die Rheologie wird mit 4-5 bewertet und die Viskosität beträgt 4,1 s.

### Beispiel 9 (Vergleichsbeispiel: Verhältnis 80 : 20)

In ein Druckgefäß werden 373 Teile Polyphosphorsäure, die 85,0 % P₂O₅ enthält, eindosiert. Danach werden 59,7 Teile 2,5-Dianilinoterephthalsäure und 14,9 Teile 2,5-Di-(4-toluidino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1679 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallpigment abgesaugt, mit Wasser neutral gewaschen und bei 80 °C getrocknet.

Man erhält 67,0 Teile Pigment. Es liegt ein Spektrum vor, das dem des 2,9-Dimethylchinacridons sehr ähnlich ist (Figur 5). Die charakeristischen Peaks sind aber sehr stark verschoben. In Tabelle 1 ist das Röntgenbeugungsspektrum der Figur 5 in digitaler Form wiedergegeben.

### Beispiel 10

In ein Druckgefäß werden 380 Teile Polyphosphorsäure, die 85,0 % P₂O₅ enthält, eindosiert. Danach werden 68,5 Teile 2,5-Dianilinoterephthalsäure und 7,6 Teile 2,5-Di-(2-chloro-anilino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1711 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallpigment abgesaugt, mit Wasser neutral gewaschen und bei 80 °C getrocknet.
Man erhält 68,3 Teile Mischkristallpigment. Es liegt das Spektrum des Mischkristallpigments vor (Figur 1). Im AM-Lack werden transparente und farbstarke Lackierungen mit sehr reinem Farbton erhalten. Die Rheologie wird mit 5 bewertet und die Viskosität beträgt 3,9 s.

### Beispiel 11

In ein Druckgefäß werden 380 Teile Polyphosphorsäure, die 85,0 % P₂O₅ enthält, eindosiert. Danach werden 68,5 Teile 2,5-Dianilinoterephthalsäure und 7,6 Teile 2,5-Di-(3-chlor-4-methyl-anilino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1712 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallpigment abgesaugt, mit Wasser neutral gewaschen und bei 80 °C getrocknet.

Man erhält 68,4 Teile Mischkristallpigment. Es liegt das Spektrum des Mischkristallpigments vor (Figur 1). Im AM-Lack werden farbstarke Lackierungen mit. sehr reinem Farbton erhalten. Die Rheologie wird mit 5 bewertet und die Viskosität beträgt 3,7 s.

### Beispiel 12

In ein Druckgefäß werden 385 Teile Polyphosphorsäure, die 85,0 % P₂O₅ enthält, eindosiert. Danach werden 69,3 Teile 2,5-Dianilinoterephthalsäure und 7,7 Teile 2,5-Di-(3-chloro-anilino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 1733 Teilen Wasser von 140 °C unter Druck hydrolysiert. Dabei steigt die Temperatur auf 160 °C an. Es wird 0,5 Stunden bei 160 °C gerührt. Danach wird auf 60 °C abgekühlt, das Mischkristallpigment abgesaugt, mit Wasser neutral gewaschen und bei 80 °C getrocknet.
Man erhält 69,2 Teile Mischkristallpigment. Es liegt das Spektrum des Mischkristallpigments vor (Figur 1). Im AM-Lack werden farbstarke Lackierungen mit reinem Farbton erhalten. Die Rheologie wird mit 5 bewertet und die Viskosität beträgt 4,2 s.

### Beispiel 13

In ein Druckgefäß werden 382 Teile Polyphosphorsäure, die 85,0 % P₂O₅ enthält, eindosiert. Danach werden 68,7 Teile 2,5-Dianilinoterephthalsäure und 7,6 Teile 2,5-Di-(4-chloro-anilino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1718 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallpigment abgesaugt, mit Wasser neutral gewaschen und bei 80 °C getrocknet.

Man erhält 69,2 Teile Mischkristallpigment. Es liegt das Spektrum des Mischkristallpigments vor (Figur 1). Im AM-Lack werden transparente und farbstarke Lackierungen mit sehr reinem Farbton erhalten. Die Rheologie wird mit 5 bewertet und die Viskosität beträgt 4,4 s.

### Beispiel 14

In ein Druckgefäß werden 298 Teile Polyphosphorsäure, die 85,0 % P₂O₅ enthält, eindosiert. Danach werden 53,7 Teile 2,5-Dianilinoterephthalsäure und 6,0 Teile 2,5-Di-(4-N-methylcarbonamido-anilino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1342 Teilen Wasser und 53 Teilen Xylol von 140 °C unter Druck hydrolysiert. Dabei steigt die Temperatur auf 155 °C an. Es wird 0,5 Stunden bei 155 °C gerührt. Danach wird auf 90 °C abgekühlt und das Xylol mit Wasserdampf abdestilliert. Anschließend wird auf 60 °C abgekühlt, das Mischkristallpigment abgesaugt, mit Wasser neutral gewaschen und bei 80 °C getrocknet.
Man erhält 53,6 Teile Mischkristallpigment. Es liegt ein der ß-Phase ähnelndes Spektrum vor (Figur 3). Im AM-Lack werden farbstarke Lackierungen erhalten. Die Rheologie wird mit 5 bewertet und die Viskosität beträgt 3,8 s.

### Beispiel 15

In ein Druckgefäß werden 465 Teile Polyphosphorsäure, die 85,0 % P₂O₅ enthält, eindosiert. Danach werden 83,8 Teile 2,5-Dianilinoterephthalsäure, 4,6 Teile 2,5-Di-(4-toluidino)-terephthalsäure und 4,6 Teile 2,5-Di-(3-chloro-anilino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 2095 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallpigment abgesaugt, mit Wasser neutral gewaschen und bei 80 °C getrocknet.
Man erhält 83,6 Teile Mischkristallpigment. Es liegt das Spektrum des Mischkristallpigments vor (Figur 1). Im AM-Lack werden farbstarke Lackierungen mit reinem Farbton erhalten. Die Rheologie wird mit 5 bewertet und die Viskosität beträgt 3,6 s.

### Beispiel 16

In ein Druckgefäß werden 392 Teile Polyphosphorsäure, die 85,0 % P₂O₅ enthält, eindosiert. Danach werden 70,5 Teile 2,5-Dianilinoterephthalsäure und 7,8 Teile 2,5-Di-(4-toluidino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1762 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallpräpigment abgesaugt und mit Wasser neutral gewaschen.
Man erhält 354,6 Teile Mischkristallpräpigment-Preßkuchen 19,8 %ig.
Zur Finishoperation werden 166,2 Teile davon in eine Lösung aus 306 Teilen Wasser und 13,7 Teilen Natronlauge 33 %ig eingetragen und verrührt. Danach werden 1,73 Teile Pigmentdispergator mit der allgemeinen Formel (II) zugegeben. In dieser Formel (II) bedeutet P den Rest des linearen , unsubstituierten Chinacridons und X die Sulfonamidgruppe (V), worin R¹ ein Wasserstoffatom, R² und R³ je eine Ethylgruppe, n die Zahl 3,0, o die Zahl 1,0 und m die Zahl 2,0 ist. Es wird auf Siedetemperatur erhitzt und 5 Stunden bei Siedetemperatur gerührt. Danach wird auf 60 °C abgekühlt, die Pigmentzubereitung abgesaugt, mit Wasser neutral gewaschen und bei 80 °C getrocknet.
Man erhält 34,9 Teile Pigmentzubereitung. Es liegt das Spektrum des Mischkristallpigments vor (Figur 1). Im AM-Lack werden farbstarke Lackierungen mit sehr reinem Farbton erhalten. Die Rheologie wird mit 5 bewertet. Die Viskosität beträgt 4,0 s und die Glanzmessung ergibt den Wert 88. Im PE-Lack und im. PE-Metallic-Lack werden farbstarke Lackierungen erhalten. Die Wetterechtheit ist sehr gut.

### Beispiel 17

In ein Druckgefäß werden 382 Teile Polyphosphorsäure, die 85,0 % P₂O₅ enthält, eindosiert. Danach werden 68,8 Teile 2,5-Dianilinoterephthalsäure und 7,6 Teile 2,5-Di-(4-toluidino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1719 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallpräpigment abgesaugt und mit Wasser neutral gewaschen.
Man erhält 340,4 Teile Mischkristallpräpigment-Preßkuchen 17,2 %ig.
Zur Finishoperation wird dieser Preßkuchen in ein Rührgefäß eingefüllt. Danach werden 584 Teile Wasser, 6,0 Teile Natriumhydroxid 98 %ig und 175 Teile Isobutanol 100 %ig zugegeben. Es wird auf 150 °C unter Druck erhitzt und 5 Stunden bei dieser Temperatur gerührt. Danach wird auf 90 °C abgekühlt und das Isobutanol bis 100 °C am Übergang abdestilliert. Anschließend wird 60 °C abgekühlt, das Mischkristallpigment abgesaugt, mit Wasser neutral gewaschen und bei 80 °C getrocknet.
Man erhält 58,5 Teile Mischkristallpigment. Es liegt das Spektrum des Mischkristallpigments vor (Figur 1). Im AM-Lack werden deckende und farbstarke Lackierungen mit reinem Farbton erhalten. Die Rheologie wird mit 5 bewertet und die Viskosität beträgt 3,4". In PVC werden farbstarke Ausfärbungen mit reinem Farbton und sehr rotstichiger Nuance erhalten. Die Dispergierbarkeit ist sehr gut. Die Ausblutechtheit ist einwandfrei. In PO werden farbstarke Ausfärbungen erhalten. Das Pigment ist für die PO-Spinnfärbung und für die Herstellung von Dünnfolien geeignet.

### Beispiel 18

9 Teile Mischkristallpigment, hergestellt gemäß Beispiel 1, und 1 Teil Pigmentdispergator mit der allgemeinen Formel (II) werden mechanisch gemischt. In dieser Formel (II) bedeutet P den Rest des linearen, unsubstituierten Chinacridons und X die Sulfonamidgruppe (V), worin R¹ ein Wasserstoffatom, R² und R³ je eine Ethylgruppe, n die Zahl 3,0 , o die Zahl 1,0 und m die Zahl 2,0 ist.
Man erhält eine Pigmentzubereitung, die im AM-Lack transparente und farbstarke Lackierungen liefert. Die Rheologie wird mit 5 bewertet. Die Viskosität beträgt 3,0 s. Die Lösemittelechtheit ist einwandfrei.

### Beispiel 19

In ein Druckgefäß werden 380 Teile Polyphosphorsäure, die 85,0 % P₂O₅ enthält, eindosiert. Danach werden 68,5 Teile 2,5-Dianilinoterephthalsäure und 7,6 Teile 2,5-Di-(2-chloro-anilino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1711 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallrohpigment abgesaugt, mit Wasser neutral gewaschen und bei 80 °C getrocknet.
Man erhält 68,3 Teile Mischkristallrohpigment.
In eine Rührwerkskugelmühle (Hersteller: Draiswerke GmbH, Mannheim), die mit 360 Teilen Zirkonmischoxidperlen vom Durchmesser 0,3 - 0,4 mm als Mahlkörper gefüllt ist, wird eine Suspension bestehend aus 88,3 Teilen Natronlauge (1,0 %ig), 8,5 Teilen Mischkristallrohpigment und 3,2 Teilen Isobutanol 100 %ig, eindosiert. Es wird mit einer Rührwerksumfangsgeschwindigkeit von 15,6 m/s sowie einer spezifischen Leistungsdichte von 3,1 kW pro Liter Mahlraum 10 Minuten lang bei 25 °C gemahlen. Anschließend wird die Mahlgutsuspension von den Mahlkörpern abgesiebt, die Mahlkörper werden mit Wasser abgespült und die vereinigten Mahlgutsuspensionen abgesaugt, mit Wasser neutral und isobutanolfrei gewaschen und bei 80 °C getrocknet.
Man erhält 7,9 Teile Mischkristallpigment. Es liegt das Spektrum des Mischkristallpigments vor (Figur 1). Im AM-Lack werden transparente und farbstarke Lackierungen erhalten. Die Rheologie wird mit 5 bewertet. Die Viskosität beträgt 3,3 s.

### Beispiel 20

In ein Druckgefäß werden 298 Teile Polyphosphorsäure, die 85,0 % P₂O₅ enthält, eindosiert. Danach werden 53,7 Teile 2,5-Dianilinoterephthalsäure und 6,0 Teile 2,5-Di-(4-N-methylcarbonamido-anilino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1342 Teilen Wasser und 53 Teilen Xylol von 140 °C unter Druck hydrolysiert. Dabei steigt die Temperatur auf 155 °C an. Es wird 0,5 Stunden bei 155 °C gerührt. Danach wird auf 90 °C abgekühlt und das Xylol mit Wasserdampf abdestilliert. Anschließend wird auf 60 °C abgekühlt, das Mischkristallpräpigment abgesaugt, mit Wasser neutral gewaschen und bei 80 °C getrocknet.
Man erhält 53,6 Teile Mischkristallpräpigment.
Zur Finishoperation werden 10 Teile Mischkristallpräpigment in 150 Teile Dimethylformamid eingetragen. Es wird auf Siedetemperatur erhitzt und 3 Stunden bei Siedetemperatur gerührt. Danach wird auf 25 °C abgekühlt, das Mischkristallpigment abgesaugt, mit Wasser dimethylformamidfrei gewaschen und bei 80 °C getrocknet.
Man erhält 9,5 Teile Mischkristallpigment. Es liegt ein der ß-Phase ähnelndes Spektrum vor (Figur 3). Im AM-Lack werden deckende Lackierungen erhalten. Die Rheologie wird mit 5 bewertet. Die Viskosität beträgt 2,6 s.

### Beispiel 21

In ein Druckgefäß werden 382 Teile Polyphosphorsäure, die 85,0 % P₂O₅ enthält, eindosiert. Danach werden 64,9 Teile 2,5-Dianilinoterephthalsäure und 11,5 Teile 2,5-Di-(4-toluidino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit einer Mischung aus 1721 Teilen Phosphorsäure 30 %ig von 140 °C unter Druck hydrolysiert. Dabei steigt die Temperatur auf 155 °C an. Es wird 0,5 Stunden bei 155 °C gerührt. Danach wird auf 60 °C abgekühlt, das Mischkristallpräpigment abgesaugt und mit Wasser neutral gewaschen.
Man erhält 312 Teile Mischkristallpräpigment-Preßkuchen 22,0 %ig.
Zur Finishoperation werden 45,5 Teile des Präpigment-Preßkuchens in eine Mischung aus 64,5 Teilen Natronlauge (1,55 %ig), 50 Teilen Ethanol und 0,5 Teilen des Natriumsalzes eines Alkylphenolpolyglykolethersulfats eingetragen. Es wird auf Siedetemperatur erhitzt und 3 Stunden bei Siedetemperatur gerührt. Danach wird auf 25 °C abgekühlt, das Mischkristallpigment abgesaugt, mit Wasser neutral und ethanolfrei gewaschen und bei 80 °C getrocknet.

Man erhält 9,7 Teile Mischkristallpigment. Es liegt das Spektrum des Mischkristallpigments vor (Figur 1). Im AM-Lack werden transparente und farbstarke Lackierungen mit sehr reinem Farbton erhalten.

### Beispiel 22

In ein Druckgefäß werden 385 Teile Polyphosphorsäure, die 85,0 % P₂O₅ enthält, eindosiert. Danach werden 69,3 Teile 2,5-Dianilinoterephthalsäure und 7,7 Teile 2,5-Di-(3-chloro-anilino)-terephthalsäure unter Rühren bei 80 bis 90 °C eingetragen und 1 Stunde auf 125 °C erhitzt, wobei der Ringschluß zum Chinacridon erfolgt. Anschließend wird das Reaktionsgemisch in ein zweites Druckgefäß eindosiert und unter Rühren mit 1733 Teilen Wasser von 140 °C unter Druck hydrolysiert. Dabei steigt die Temperatur auf 160 °C an. Es wird 0,5 Stunden bei 160 °C gerührt. Danach wird auf 60 °C abgekühlt, das Mischkristallpigment abgesaugt, mit Wasser neutral gewaschen und bei 80 °C getrocknet.
Man erhält 69,2 Teile Mischkristallpräpigment.
Zur Finishoperation werden 10 Teile Mischkristallpräpigment in 150 Teile Chlorbenzol eingetragen. Es wird auf Siedetemperatur erhitzt und 5 Stunden bei Siedetemperatur gerührt. Danach wird auf 90 °C abgekühlt und das Chlorbenzol mit Wasserdampf abdestilliert. Es wird auf 60 °C abgekühlt, das Mischkristallpigment abgesaugt, mit Wasser gewaschen und bei 80 °C getrocknet.
Man erhält 9,6 Teile Mischkristallpigment. Es liegt das Spektrum des Mischkristallpigments vor (Figur 1). Im AM-Lack werden deckende Lackierungen erhalten. Die Rheologie wird mit 5 bewertet. Die Viskosität beträgt 3,3 s.

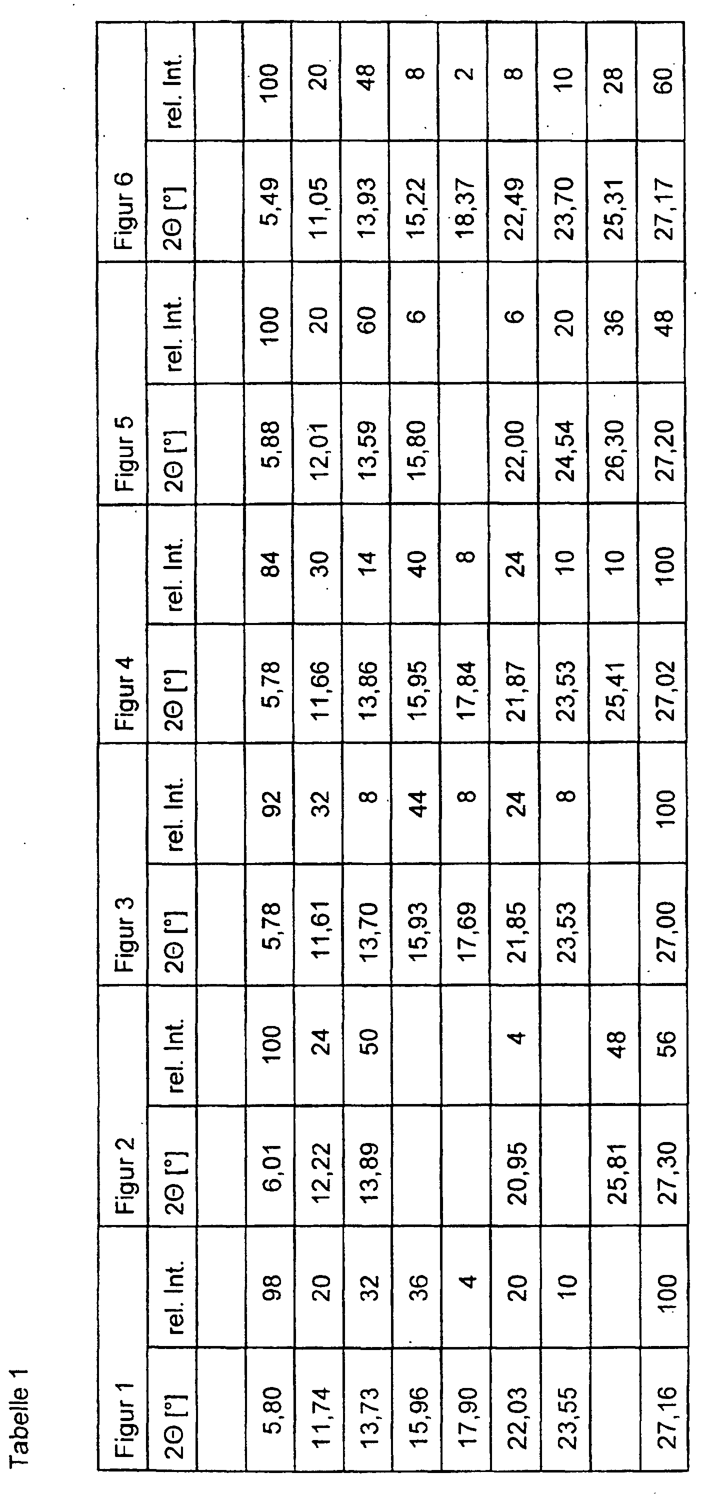

## Patentansprüche

1. Chinacridon-Mischkristallpigment der β-Phase bestehend aus
a) 85 bis 99 Gew.-% an unsubstituiertem Chinacridon der β-Phase der allgemeinen Formel (I), 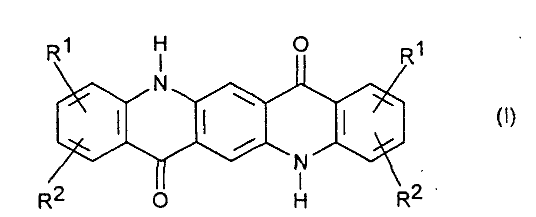 in welcher R¹ und R² Wasserstoffatome bedeuten und
b) 1 bis 15 Gew.-% eines oder mehrerer substituierter Chinacridone der allgemeinen Formel (I), worin die Substituenten R¹ und R² gleich oder verschieden sind und Chlor-, Brom- oder Fluoratome oder C₁-C₄-Alkyl-, C₁-C₄-Alkoxy- oder Carbonamidgruppen, die durch C₁-C₆-Alkylgruppen substituiert sein können, und R¹ zusätzlich Wasserstoff sein kann, bedeuten.

2. Chinacridon-Mischkristallpigment, nach Anspruch 1, enthaltend ein oder zwei Verbindungen gemäß b), worin R¹ Wasserstoff, Chlor, Methyl oder Carbonamid, und R² Chlor, Methyl oder Carbonamid bedeuten.

3. Verfahren zur Herstellung eines Chinacridon-Mischkristallpigments nach Anspruch 1 oder 2, **dadurch gekennzeichnet, daß** man die der Verbindung a) zugrundeliegende 2,5-Dianilino-terephthalsäure und die der Verbindung (b) zugrundeliegende(n) substituierte(n) Terephthalsäure(n) im Verhältnis 85 : 15 bis 99 : 1, insbesondere 87 : 13 bis 95 : 5, in Gegenwart von Polyphosphorsäure und/oder Polyphosphorsäureestern cyclisiert, das nach der Cyclisierung vorliegende Ringschlußgemisch bei einer Temperatur von mindestens 110 °C mit Wasser oder verdünnter Phosphorsäure unter Druck hydrolysiert und anschließend das Mischkristallpigment, gegebenenfalls nach einem Feinverteilungsschritt und/oder nach einer Finishbehandlung, isoliert.

4. Verfahren nach Anspruch 3, **dadurch gekennzeichnet, daß** die bei der Cyclisierung verwendete Polyphosphorsäure oder der Polyphosphorsäureester einen P₂O₅-Gehalt zwischen 80 und 85 Gew.-%, vorzugsweise zwischen 83 und 85 Gew.-%, hat.

5. Verfahren nach Anspruch 3 oder 4, **dadurch gekennzeichnet, daß** das nach der Cyclisierung vorliegende Ringschlußgemisch bei einer Temperatur von 110 bis 180 °C, vorzugsweise 135 bis 165 °C, hydrolysiert wird.

6. Verfahren nach mindestens einem der Ansprüche 3 bis 5, **dadurch gekennzeichnet, daß** ein organisches Lösemittel, ein Pigmentdispergator, ein oberflächenaktives Mittel, ein Entschäumer oder ein Extender zugesetzt wird.

7. Verfahren nach mindestens einem der Ansprüche 3 bis 6, **dadurch gekennzeichnet, daß** ein Pigmentdispergator der allgemeinen Formel (II)
P ― Xm (II)
eingesetzt wird, in der
P für einen m-wertigen Rest eines linearen Chinacridons der allgemeinen Formel (I) steht, in dem R¹ und R² gleich sind und Wasserstoffatome oder Methylgruppen darstellen,
X eine Gruppe der Formel (III)
-COOM (III)
oder eine Gruppe der Formel (IV)
-SO₃M (IV)
darstellt, worin
M das Wasserstoffion H⁺ oder das Äquivalent M^{r+}/r eines r-wertigen Metallkations bezeichnet, wobei r für den betreffenden Fall dann übereinstimmend eine der Zahlen 1, 2 oder 3 ist, wie z.B. Li¹⁺, Na¹⁺, K¹⁺, Mg²⁺, Ca²⁺+, Sr²⁺, Ba²⁺, Mn²⁺, Cu²⁺, Ni²⁺, Cd²⁺, Co²⁺, Zn²⁺, Fe²⁺, Al³⁺, Cr³⁺ oder Fe³⁺; oder ein Ammoniumion mit der Struktur N⁺R³R⁴R⁵R⁶ definiert, wobei die Substituenten R³, R⁴, R⁵ und R⁶ am quartären N-Atom einzeln für sich genommen sowie unabhängig voneinander jeweils Wasserstoffatome oder C₁-C₃₀-Alkyl-, C₂-C₃₀-Alkenyl- oder C₅-C₃₀- Cycloalkylgruppen, die durch Hydroxy-, Di-(C₁-C₄-alkyl)amino-, Carboxy- oder Carboxamidgruppen substituiert sein können und m eine Zahl zwischen 1 und 4 ist, oder
X eine Gruppe der Formel (V) 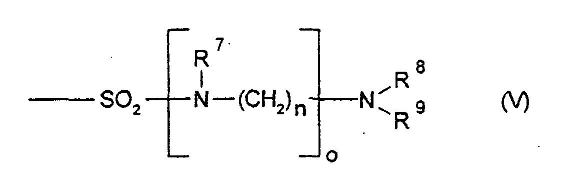 darstellt, worin R⁸ und R⁹ unabhängig voneinander jeweils ein Wasserstoffatom, eine C₁-C₂₀-Alkyl-, C₂-C₂₀-Alkenylgruppe oder eine C₅-C₇-Cycloalkylgruppe sind, oder worin R⁸ und R⁹ gemeinsam mit dem angrenzenden Stickstoffatom ein aliphatisches oder aromatisches, fünf- oder sechsgliedriges heterocyclisches Ringsystem bilden, mit jeweils 1 bis 3 ringangehörigen, gleichen oder unterschiedlichen Heteroatomen aus der Reihe Stickstoff, Sauerstoff oder Schwefel, R⁷ ein Wasserstoffatom oder eine C₁-C₄-Alkylgruppe ist, n eine Zahl von 1 bis 6, o die Zahl 0 oder 1, und m eine Zahl von 1 bis 4 ist, oder
X eine Gruppe der Formel (VI) 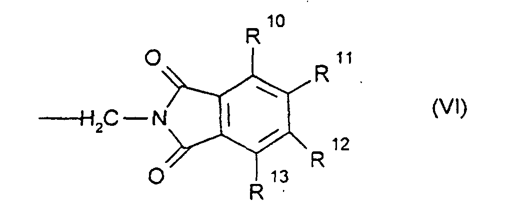 darstellt, wobei R¹⁰, R¹² und R¹³ ein Wasserstoff-, Fluor-, Chlor- oder Bromatom ist, und R¹¹ ein Wasserstoff-, Fluor, Chlor- oder Bromatom ist oder eine Nitro-, C₁-C₅-Alkyl-, C₁-C₆-Alkoxy- oder Benzoylaminogruppe bedeutet und m eine Zahl von 1 bis 4 ist.

8. Verfahren nach mindestens einem der Ansprüche 3 bis 7, **dadurch gekennzeichnet, daß** der Feinverteilungsschritt eine Trocken- oder eine Naßmahlung, vorzugsweise eine Naßmahlung auf einer Rührwerkskugelmühle, ist.

9. Verfahren nach mindestens einem der Ansprüche 3 bis 8, **dadurch gekennzeichnet, daß** die Finishbehandlung mit Alkanolen oder Carbonsäureamiden, gegebenenfalls in Gegenwart von Wasser oder wäßrigem Alkali, durchgeführt wird.

10. Verwendung eines Chinacridon-Mischkristallpigments nach Anspruch 1 oder 2 als Farbmittel zum Pigmentieren von hochmolekularen organischen Materialien.

11. Verwendung nach Anspruch 10 zum Pigmentieren von Celluloseethern, Celluloseestern, natürlichen Harzen, Kunstharzen, Polyolefinen, Polyvinylchlorid, Polyacrylnitril, Polyacrylaten, Polyamiden, Polyurethanen, Polyestern, Gummi, Casein oder Silikon.

## Claims

1. A β-phase quinacridone mixed crystal pigment consisting of
a) from 85 to 99% by weight of unsubstituted β-phase quinacridone of the formula (I) 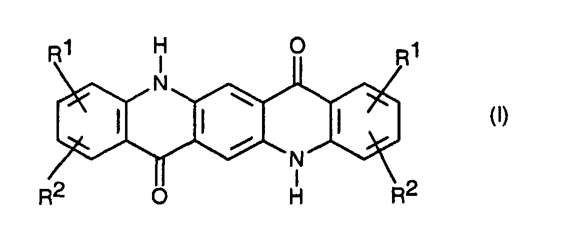 in which R¹ and R² are hydrogen atoms and
b) from 1 to 15% by weight of one or more substituted quinacridones of the formula (I) in which the substituents R¹ and R² are identical or different and are chlorine, bromine or fluorine atoms or C₁-C₄-alkyl, C₁-C₄-alkoxy or carboxamido groups which can be substituted by C₁-C₆-alkyl groups and R¹ can additionally be hydrogen.

2. A quinacridone mixed crystal pigment as claimed in claim 1 comprising one or two compounds in accordance with b) in which R¹ is hydrogen, chlorine, methyl or carboxamide and R² is chlorine, methyl or carboxamido.

3. A process for preparing a quinacridone mixed crystal pigment as claimed in claim 1 or 2, which comprises cyclizing the 2,5-dianilinoterephthalic acid on which the compound a) is based and the substituted terephthalic acid(s) on which the compound (b) is based in a ratio of from 85 : 15 to 99 : 1, in particular from 87 : 13 to 95 : 5, in the presence of polyphosphoric acid and/or polyphosphoric esters, hydrolyzing the ring closure mixture which is present after cyclization at a temperature of at least 110°C using water or dilute phosphoric acid, under pressure and then isolating the mixed crystal pigment, directly or following a fine division step and/or a finishing treatment.

4. The process as claimed in claim 3, wherein the polyphosphoric acid or polyphosphoric ester used in the cyclization has a P₂O₅ content of between 80 and 85% by weight, preferably between 83 and 85% by weight.

5. The process as claimed in claim 3 or 4, wherein the ring closure mixture which is present after cyclization is hydrolyzed at a temperature of from 110 to 180°C, preferably from 135 to 165°C.

6. The process as claimed in at least one of claims 3 to 5, wherein an organic solvent, a pigment dispersant, a surfactant, a defoamer or an extender is added.

7. The process as claimed in at least one of claims 3 to 6, wherein a pigment dispersant of the formula (II)
P ― Xm (II)
is employed in which
P is an m-valent radical of a linear quinacridone of the formula (I) in which R¹ and R² are identical and are hydrogen atoms or methyl groups,
X is a group of the formula (III)
-COOM (III)
or a group of the formula (IV)
-SO₃M (IV)
in which
M is the hydrogen ion H⁺ or the equivalent M^{r+}/r of an r-valent metal cation, where r is in each case at each occurrence one of the numbers 1, 2 and 3, examples being Li¹⁺, Na¹⁺, K¹⁺, Mg²⁺, Ca²⁺+, Sr²⁺, Ba²⁺, Mn²⁺, Cu²⁺, Ni²⁺, Cd²⁺, Co²⁺, Zn²⁺, Fe²⁺, Al³⁺, Cr³⁺ or Fe³⁺; or an ammonium ion having the structure N⁺R³R⁴R⁵R⁶, where the substituents R³, R⁴, R⁵ and R⁶ on the quaternary nitrogen atom are each individually and independently of one another hydrogen atoms or C₁-C₃₀-alkyl, C₂-C₃₀-alkenyl or C₅-C₃₀-cycloalkyl groups, which can be substituted by hydroxyl, di-(C₁-C₄-alkyl)amino, carboxyl or carboxamide groups, and m is a number between 1 and 4, or
X is a group of the formula (V) 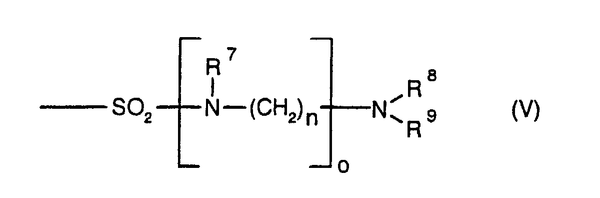 in which R⁸ and R⁹ independently of one another are each a hydrogen atom, a C₁-C₂₀-alkyl or C₂-C₂₀-alkenyl group or a C₅-C₇-cycloalkyl group, or in which R⁸ and R⁹, together with the adjacent nitrogen atom, form an aliphatic or aromatic, five- or six-membered heterocyclic ring system having in each case from 1 to 3 identical or different ring-member heteroatoms from the series consisting of nitrogen, oxygen or sulfur, R⁷ is a hydrogen atom or a C₁-C₄-alkyl group, n is a number from 1 to 6, o is the number 0 or 1, and m is a number from 1 to 4, or
X is a group of the formula (VI) 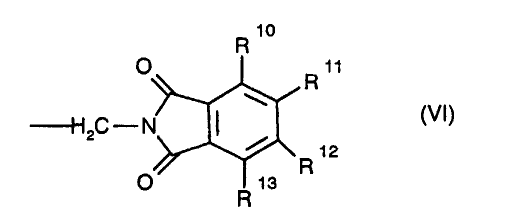 in which R¹⁰, R¹² and R¹³ are each a hydrogen, fluorine, chlorine or bromine atom and R¹¹ is a hydrogen, fluorine, chlorine or bromine atom or is a nitro, C₁-C₅-alkyl, C₁-C₆-alkoxy or benzoylamino group, and m is a number from 1 to 4.

8. The process as claimed in at least one of claims 3 to 7, wherein the fine division step is dry or wet grinding, preferably wet grinding in a stirred ball mill.

9. The process as claimed in at least one of claims 3 to 8, wherein the finishing treatment is carried out with alkanols or carboxamides, alone or in the presence of water or an aqueous alkali.

10. The use of a quinacridone mixed crystal pigment as claimed in claim 1 or 2 as a colorant for pigmenting high molecular mass organic materials.

11. The use as claimed in claim 10 for pigmenting cellulose ethers, cellulose esters, natural resins, synthetic resins, polyolefins, polyvinyl chloride, polyacrylonitrile, polyacrylates, polyamides, polyurethanes, polyesters, rubber, casein or silicone.

## Revendications

1. Pigment en cristaux mixtes de quinacridones de phase β constitués de
a) 85 à 99 % en masse de quinacridone non substituée de phase β, de formule générale (I) 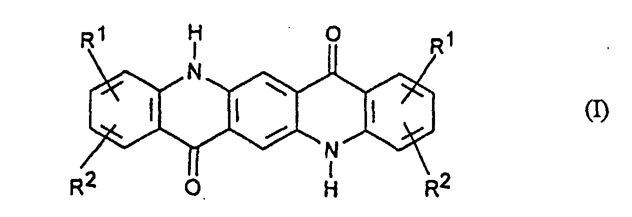 dans laquelle R¹ et R² représentent des atomes d'hydrogène, et de
b) 1 à 15 % en masse d'une ou plusieurs quinacridones substituées de formule générale (I) dans laquelle les substituants R¹ et R² sont identiques ou différents et représentent des atomes de chlore, de brome ou de fluor ou des groupes alkyle en C₁-C₄ ou alcoxy en C₁-C₄ ou des groupes carboxamide pouvant être substitués par des groupes alkyle en C₁-C₆, et R¹ peut en outre être un atome d'hydrogène.

2. Pigment en cristaux mixtes de quinacridones selon la revendication 1, contenant un ou deux composés selon b), dans lesquels R¹ est un atome d'hydrogène ou de chlore ou un groupe méthyle ou carboxamide, et R² est un atome de chlore ou un groupe méthyle ou carboxamide.

3. Procédé de préparation d'un pigment en cristaux mixtes de quinacridones selon la revendication 1 ou 2, **caractérisé en ce que** l'on cyclise l'acide 2,5-dianilinotéréphtalique dont dérive le composé a) et le ou les acides téréphtaliques substitués dont dérive le composé b), dans un rapport de 85:15 à 99:1, en particulier de 87:13 à 95:5, en présence d'acide polyphosphorique et/ou d'esters d'acide polyphosphorique, on hydrolyse sous pression le mélange de cyclisation obtenu après la cyclisation à une température d'au moins 110°C avec de l'eau ou de l'acide phosphorique dilué, puis on isole le pigment en cristaux mixtes, éventuellement après une étape de division fine et/ou un traitement de finissage.

4. Procédé selon la revendication 3, **caractérisé en ce que** l'acide polyphosphorique ou l'ester d'acide polyphosphorique utilisé dans la cyclisation a une teneur en P₂O₅ comprise entre 80 et 85 % en masse, de préférence entre 83 et 85 % en masse.

5. Procédé selon la revendication 3 ou 4, **caractérisé en ce que** l'on hydrolyse le mélange de cyclisation obtenu après la cyclisation à une température de 110 à 180°C, de préférence de 135 à 165°C.

6. Procédé selon au moins une des revendications 3 à 5, **caractérisé en ce que** l'on ajoute un solvant organique, un dispersant de pigment, un agent tensioactif, un antimousse ou un diluant.

7. Procédé selon au moins une des revendications 3 à 6, **caractérisé en ce que** l'on utilise un dispersant de pigment de formule générale (II)
P - Xm (II)
dans laquelle
P représente un reste de valence m d'une quinacridone linéaire de formule générale (I), dans laquelle R¹ et R² sont identiques et représentent des atomes d'hydrogène ou des groupes méthyle,
X représente un groupe de formule (III)
-COOM (III)
ou un groupe de formule (IV)
-SO₃M (IV)
dans lesquelles
M représente l'ion hydrogène H⁺ ou l'équivalent M^{r+}/r d'un cation métallique de valence r, r étant alors dans le cas en question de façon correspondante l'un des nombres 1, 2 ou 3, comme, par exemple, Li¹⁺, Na¹⁺, K¹⁺, Mg²⁺, Ca²⁺, Sr²⁺, Ba²⁺, Mn²⁺, Cu²⁺, Ni²⁺, Cd²⁺, Co²⁺, Zn²⁺, Fe²⁺, Al³⁺, Cr³⁺ ou Fe³⁺, ou un ion ammonium ayant la structure N⁺R³R⁴R⁵R⁶, où les substituants R³, R⁴, R⁵ et R⁶ de l'atome d'azote quaternaire, pris chacun individuellement et indépendamment les uns des autres, représentent chacun un atome d'hydrogène ou un groupe alkyle en C₁-C₃₀, alcényle en C₂-C₃₀ ou cycloalkyle en C₅-C₃₀, qui peuvent être substitués par des groupes hydroxy, di(alkyl en C₁-C₄)amino, carboxy ou carboxamido, et m est un nombre compris entre 1 et 4, ou
X représente un groupe de formule (V) 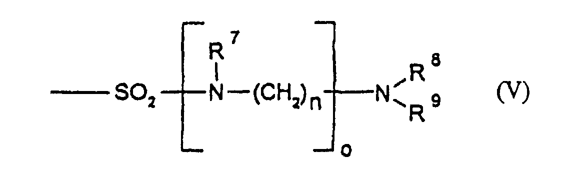 dans laquelle R⁸ et R⁹ représentent chacun, indépendamment l'un de l'autre, un atome d'hydrogène ou un groupe alkyle en C₁-C₂₀, alcényle en C₂-C₂₀ ou cycloalkyle en C₅-C₇, ou R⁸ et R⁹ forment ensemble avec l'atome d'azote adjacent un système cyclique hétérocyclique aliphatique ou aromatique de 5 ou 6 chaînons, avec à chaque fois 1 à 3 hétéroatomes cycliques identiques ou différents choisis parmi l'azote, l'oxygène et le soufre, R⁷ représente un atome d'hydrogène ou un groupe alkyle en C₁-C₄, n est un nombre de 1 à 6, o est égal à 0 ou 1 et m est un nombre de 1 à 4, ou
X est un groupe de formule (VI) 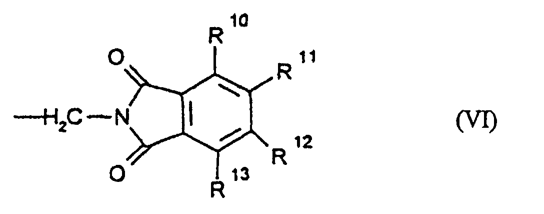 dans laquelle R¹⁰, R¹² et R¹³ représentent un atome d'hydrogène, de fluor, de chlore ou de brome, et R¹¹ représente un atome d'hydrogène, de fluor, de chlore ou de brome ou un groupe nitro, alkyle en C₁-C₅, alcoxy en C₁-C₆ ou benzoylamino, et m est un nombre de 1 à 4.

8. Procédé selon au moins une des revendications 3 à 7, **caractérisé en ce que** l'étape de division fine est un broyage à l'état sec ou humide, de préférence un broyage à l'état humide dans un broyeur à billes.

9. Procédé selon au moins une des revendications 3 à 8, **caractérisé en ce que** l'on effectue le traitement de finissage avec des alcanols ou des amides d'acides carboxyliques, éventuellement en présence d'eau ou d'une base aqueuse.

10. Utilisation d'un pigment en cristaux mixtes de quinacridones selon la revendication 1 ou 2 pour la pigmentation de matériaux organiques macromoléculaires.

11. Utilisation selon la revendication 10 pour la pigmentation d'éthers de cellulose, d'esters de cellulose, de résines naturelles, de résines synthétiques, de polyoléfines, de poly(chlorure de vinyle), de polyacrylonitrile, de polyacrylates, de polyamides, de polyuréthanes, de polyesters, de caoutchouc, de caséine ou de silicone.
